(19) **Europäisches Patentamt / European Patent Office / Office européen des brevets**

(11) **EP 4 271 073 B1**

(12) **EUROPEAN PATENT SPECIFICATION**

(45) Date of publication and mention of the grant of the patent:
**25.03.2026 Bulletin 2026/13**

(51) International Patent Classification (IPC):
**H04W 74/0808** (2024.01)    **H04W 72/02** (2009.01)
**H04W 72/25** (2023.01)

(21) Application number: **22217199.3**

(22) Date of filing: **29.12.2022**

(52) Cooperative Patent Classification (CPC):
**H04W 74/0808; H04W 72/02; H04W 72/25**

(54) **METHOD AND APPARATUS FOR PERFORMING SIDELINK COMMUNICATION IN WIRELESS COMMUNICATION SYSTEM**

VERFAHREN UND VORRICHTUNG ZUR DURCHFÜHRUNG VON SIDELINK-KOMMUNIKATION IN EINEM DRAHTLOSKOMMUNIKATIONSSYSTEM

PROCÉDÉ ET APPAREIL POUR EFFECTUER UNE COMMUNICATION DE LIAISON LATÉRALE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.04.2022 KR 20220053066**

(43) Date of publication of application:
**01.11.2023 Bulletin 2023/44**

(73) Proprietor: **LG Electronics, Inc.**
**Yeongdeungpo-gu**
**Seoul 07336 (KR)**

(72) Inventors:
- **KIM, Seonwook**
  **06772 Seoul (KR)**
- **YANG, Suckchel**
  **06772 Seoul (KR)**
- **LEE, Seungmin**
  **06772 Seoul (KR)**
- **SHIN, Seokmin**
  **06772 Seoul (KR)**

(74) Representative: **Maikowski & Ninnemann**
**Patentanwälte Partnerschaft mbB**
**Postfach 15 09 20**
**10671 Berlin (DE)**

(56) References cited:
**WO-A1-2021/237654    WO-A1-2022/073183**
**US-A1- 2022 077 991**

- **"5G NR", 18 September 2020, ELSEVIER, ISBN: 978-0-12-822320-8, article DAHLMAN ERIK ET AL: "5G NR The Next Generation Wireless Access Technology, 2nd Edition, Chapters 18-27", pages: 1 - 611, XP055908003**

**Description**

[Technical Field]

The present disclosure relates to a wireless communication system, and more particularly, to a method and apparatus for performing sidelink communication in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

A mobile communication system may support end-to-end direct communication (i.e., sidelink communication) performed using a sidelink resource allocation mode, a physical-layer signal/channel, and a physical layer procedure. Resource allocation modes supported in sidelink communication are divided into mode 1 in which sidelink resource allocation is provided by the network and mode 2 in which a terminal determines sidelink transmission resources from a resource pool.

Meanwhile, in an unlicensed band, an interlace-based uplink channel structure has been introduced in consideration of regulatory requirements such as occupied channel bandwidth and power spectral density. However, when sidelink communication is supported in an unlicensed band, a resource allocation scheme in the frequency domain has not yet been introduced.

WO 2021/237654 A1 describes wireless communications systems and methods related to multiplexing a sidelink-synchronization signal block (S-SSB) transmission with a physical sidelink control channel (PSCCH)/physical sidelink shared channel (PSSCH) transmission for occupancy channel bandwidth (OCB) fulfilment. A user equipment (UE) determines a multiplex configuration for multiplexing a sidelink transmission with a S-SSB transmission in a sidelink bandwidth part (BWP). The UE communicates, in the sidelink BWP during a sidelink slot, the S-SSB transmission. The UE communicates, in the sidelink BWP during the sidelink slot, the sidelink transmission, where the S-SSB transmission and the sidelink transmission are communicated by multiplexing the sidelink transmission and the S-SSB transmission based on the multiplex configuration.

US 2022/0077991 A1 describes a method for performing wireless communication by a first device, and an apparatus supporting same. The method includes: determining a first PSSCH resource, a second PSSCH resource, and a third PSSCH resource; and transmitting, to a second device, Sidelink Control Information (SCI) including information related to frequency domains of the second PSSCH resource and the third PSSCH resource on a first PSCCH resource related to the first PSSCH resource. Here, the information related to the frequency domains is obtained on the basis of the number of subchannels included in a resource pool, an index of a starting subchannel of the second PSSCH resource, an index of a starting subchannel of the third PSSCH resource, the number of subchannels included in the second PSSCH resource, and the number of subchannels included in the third PSSCH resource, and the information related to the frequency domains may be a zero or positive integer.

WO 2022/073183 A1 relates to techniques for communicating using sidelink resources allocated in an unlicensed spectrum. A method that may be performed by a first UE includes establishing a connection with a second UE for sidelink communication in an unlicensed spectrum and communicating with the second UE via the connection using one or more sidelink sub-channels in the unlicensed spectrum according to a mapping between sidelink sub-channels and resource block (RB) sets of the unlicensed spectrum, wherein the unlicensed spectrum comprises a plurality of RB sets and one or more guard bands disposed between RB sets in the plurality RB sets.

The handbook "5G NR The Next Generation Wireless Access Technology", by E. Dahlman et al., 2nd Edition, ISBN 978-0-12-822320-8, describes, in Chapters 18-27, general aspects of the NR Wireless Access Technology, such as LTE/NR Interworking.

[Disclosure]

[Technical Problem]

A technical problem of the present disclosure is to provide a method and apparatus for performing sidelink communication in a wireless communication system.

A technical problem of the present disclosure is to provide a method and apparatus for configuring resources on a frequency domain for sidelink transmission in an unlicensed band.

A technical problem of the present disclosure is to provide a method and apparatus for configuring one subchannel based on resource block-interlace related information.

The technical problems to be achieved by the present disclosure are not limited to the above-described technical objects, and other technical problems which are not described herein will be clearly understood by those skilled in the pertinent art from the following description.

[Technical Solution]

The invention is defined by the independent claims. Features of exemplary embodiments are defined in the dependent claims.

For example, a method for a first user equipment (UE) to perform sidelink (SL) communication in a wireless communication system may include receiving configuration information related to an SL resource pool including first information related to at least one subchannel from a base station; and transmitting sidelink control information (SCI) indicating an index of a specific subchannel among the at least one subchannel to a second UE, and the at least one subchannel is configured based on at least one resource block (RB)-interlace, and the configuration information includes a number of the at least one RB-interlace and an index of a starting interlace and sidelink data is not transmitted to the second UE through the specific subchannel based on an unsuccessful channel access procedure for a third RB set among at least one RB set corresponding to the specific subchannel.

According to another example, a method for performing sidelink communication by a second terminal in a wireless communication system may include receiving sidelink control information (SCI) indicating an index of a specific subchannel among at least one subchannel from a first UE; and receiving sidelink data from the first UE based on the SCI, and the at least one subchannel is configured based on at least one resource block (RB)-interlace, and the configuration information includes a number of the at least one RB-interlace and an index of a starting interlace

[Technical Effects]

A method and apparatus for performing sidelink communication in a wireless communication system are provided.

As an embodiment of the present disclosure, a method and apparatus for efficiently configuring resources on a frequency domain for sidelink transmission in an unlicensed band may be provided.

According to an embodiment of the present disclosure, a method and apparatus for configuring one subchannel based on information related to RB-interlace may be provided.

Effects achievable by the present disclosure are not limited to the above-described effects, and other effects which are not described herein may be clearly understood by those skilled in the pertinent art from the following description.

[Brief Description of Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a radio protocol structure for SL communication to which the present disclosure may be applied.
FIG. 8 and 9 illustrate a procedure for performing Vehicle-to-Everything (V2X) or SL communication by a terminal and/or a base station in a wireless communication system to which the present disclosure may be applied.

FIG. 10 is a diagram for describing a resource unit and a measurement operation for measuring a channel busy ratio (CBR) to which the present disclosure may be applied.

FIG. 11 is a diagram for describing a process in which a first user equipment (UE) performs sidelink communication according to an embodiment of the present disclosure.

FIG. 12 is a diagram for describing a process in which a second UE performs sidelink communication according to an embodiment of the present disclosure.

FIG. 13 is a diagram for describing a signaling procedure of a base station, a first UE, and a second UE according to an embodiment of the present disclosure.

FIG. 14 illustrates a block configuration diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal

- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

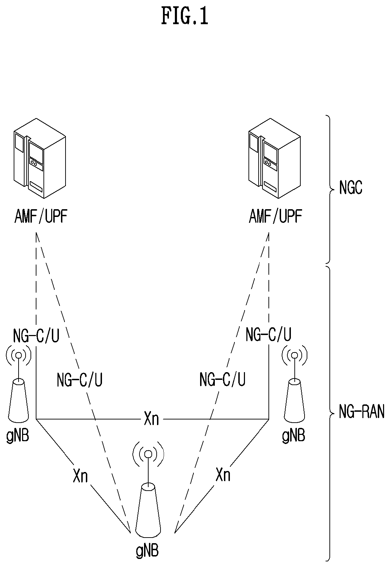

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

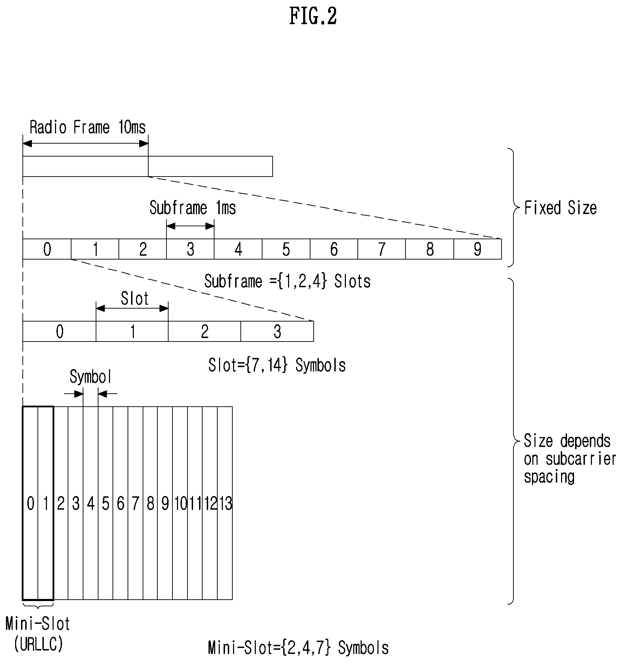

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max} N_f/100) \cdot T_c=10ms$. Here, a radio frame is configured with 10 subframes having a duration of $T_{sf}=(\Delta f_{max} N_f/1000) \cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symp}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe, \mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe, \mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

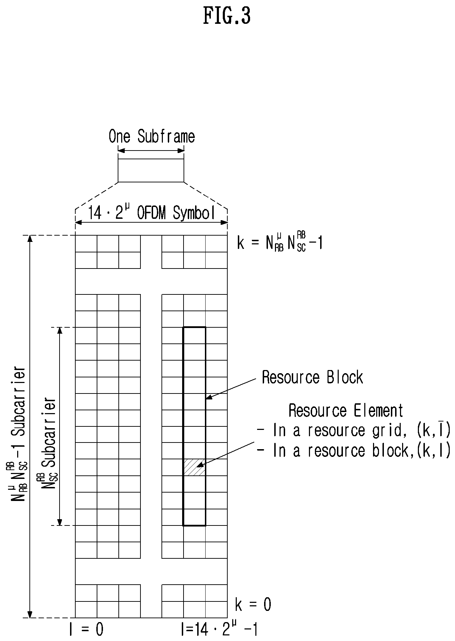

FIG. 3 illustrates a resource grid in a wireless communication system to which the present disclosure may be applied.

In reference to FIG. 3, it is illustratively described that a resource grid is configured with $N_{RB}^{\mu} N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu} N_{symb}^{(\mu)}$ and one or more resource grids configured with $N_{RB}^{\mu} N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^\mu N_{sc}^{RB}-1$ is an index in a frequency domain and $l'=0,...,2^\mu N_{symb}^{(\mu)}-1$ refers to a position of a symbol in a subframe. When referring to a resource element in a slot, an index pair (k,l) is used. Here, $l=0,...,N_{symb}^\mu-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number). Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^\mu$ and a resource element (k,l) for a subcarrier spacing configuration $\mu$ in a frequency domain is given as in the following Equation 1.

【Equation 1】

$$n_{CRB}^\mu = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^\mu = n_{PRB}^\mu + N_{BWP,i}^{start,\mu}$$

$N_{BWP,i}^{start,\mu}$ is a common resource block that a BWP starts relatively to common resource block 0.

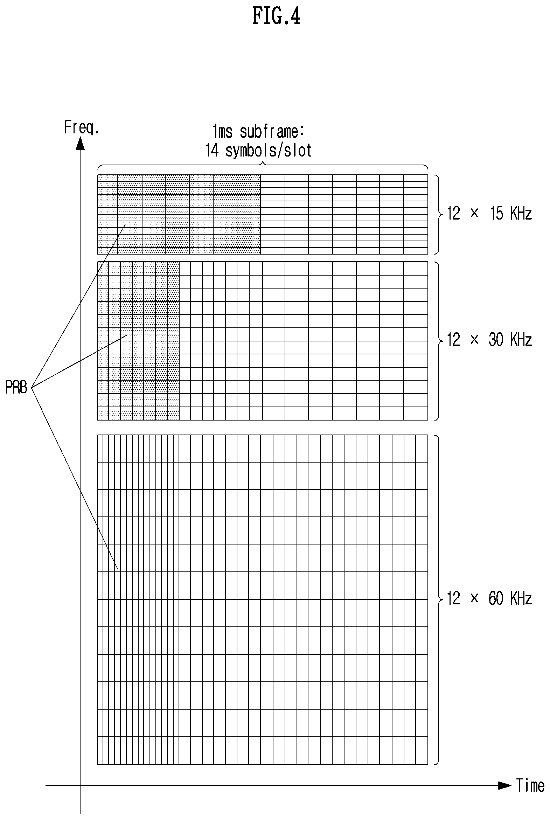

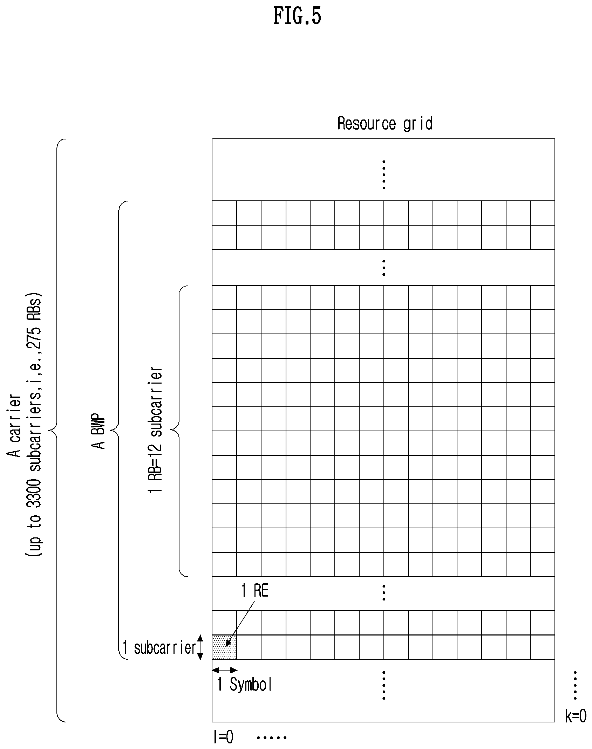

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience.

A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing.

Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.).

In addition, a base station may indicate switching to other configured DL/UL BWP (by L1 signaling or MAC CE or RRC signaling, etc.).

Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

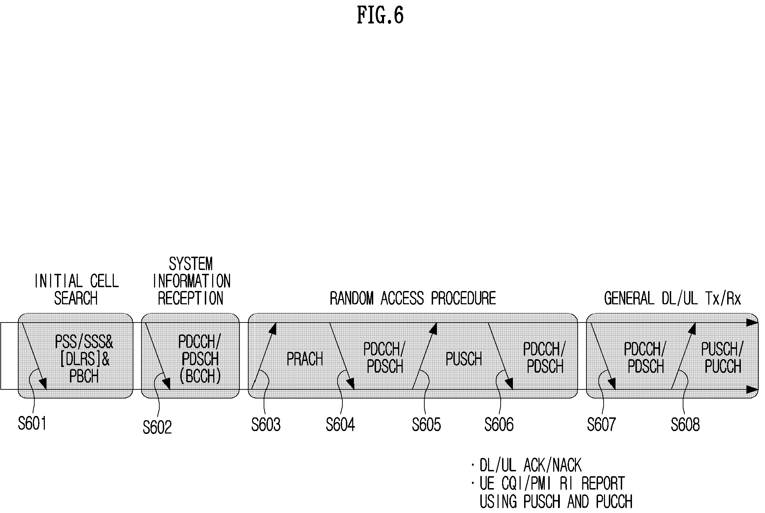

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH (Physical Uplink Shared Channel) /PUCCH (physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |

(continued)

| DCI Format | Use |
|---|---|
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI (Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB (physical resource block) mapping, etc.), information related to a transport block (TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Vehicle-to-X; Vehicle-to-Everything) communication

V2X communication refers to a communication method that exchanges or shares information such as traffic conditions while communicating with road infrastructure and other vehicles while driving. V2X includes V2V(vehicle-to-vehicle), which means LTE/NR-based communication between vehicles, V2P(vehicle-to-pedestrian), which refers to LTE/NR-based communication between a vehicle and a terminal carried by an individual and V2I/N(vehicle-to-infrastructure/network) refers to LTE/NR-based communication between vehicles and roadside units/networks.

Here, the RSU may be a transportation infrastructure entity implemented by a base station or a fixed terminal, and may be, for example, an entity that transmits a speed notification to a vehicle. In addition, V2X communication may include a method using PC5 link (or sidelink (SL)), which is a terminal-to-end communication interface, a method using Uu link (or uplink and downlink), which is a communication interface between a base station and a terminal, or a method using both PC5 link and Uu link.

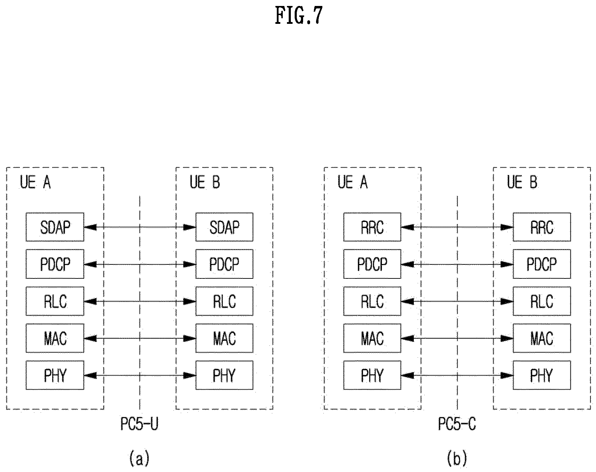

FIG. 7 shows a radio protocol architecture for SL communication. The embodiment of FIG. 7 may be combined with various embodiments of the present disclosure. Specifically, (a) of FIG. 7 shows a user plane protocol stack, and (b) of FIG. 7 shows a control plane protocol stack.

Sidelink (SL) synchronization signal transmission and reception method

Hereinafter, a method of configuring and transmitting and receiving a sidelink synchronization signal (SLSS) will be described.

The SLSS is a specific sequence in the SL and may include a Primary Sidelink Synchronization Signal (PSSS) and a Secondary Sidelink Synchronization Signal (SSSS).

PSSS may be referred to as S-PSS (Sidelink Primary Synchronization Signal), and SSSS may be referred to as S-SSS (Sidelink Secondary Synchronization Signal).

For example, length-127 M-sequences may be used for S-PSS and length-127 Gold-sequences may be used for S-SSS.

For example, the terminal may detect an initial signal using S-PSS and acquire synchronization. For example, the terminal may obtain detailed synchronization using S-PSS and S-SSS and detect a synchronization signal ID.

PSBCH (Physical Sidelink Broadcast Channel) may be a (broadcasting) channel carrying basic (system) information that a terminal needs to know first before transmitting and receiving an SL signal.

For example, basic (system) information may include information related to SLSS, duplex mode (DM), TDD UL/DL (Time Division Duplex Uplink/Downlink) configuration, Information about resource pools, types of applications related to SLSS, subframe offset, and broadcast information. For example, for evaluation of PSBCH performance, in NR V2X, the payload size of PSBCH may be 56 bits (including 24 bits of CRC).

S-PSS, S-SSS, and PSBCH may be included in a block format (e.g., SL SS (Synchronization Signal) / PSBCH block, hereinafter S-SSB (Sidelink-Synchronization Signal Block)) supporting periodic transmission.

The S-SSB may have the same numerology (i.e., SCS and CP length) as the PSCCH(Physical Sidelink Control Channel)/PSSCH(Physical Sidelink Shared Channel) in the carrier, and the transmission bandwidth may be within a (pre) set SL BWP (Sidelink BWP).

For example, the bandwidth of the S-SSB may be 11 Resource Blocks (RBs). For example, PSBCH may span 11 RBs. And, the frequency position of the S-SSB may be configured (in advance). Therefore, the UE may not need to perform hypothesis detection in frequency to discover the S-SSB in the carrier.

For example, the UE may generate an S-SS/PSBCH block (i.e., S-SSB), map the generated S-SS/PSBCH block (i.e., S-SSB) onto a physical resource, and transmit the same.

SL signal transmission and reception method

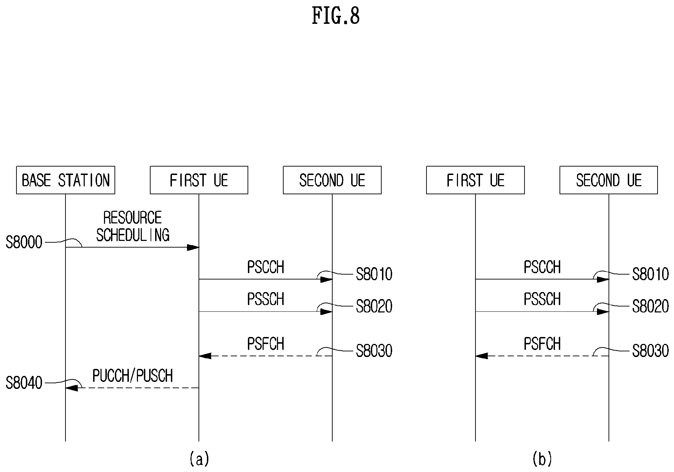

According to an embodiment of the present disclosure, FIG. 8 is a flowchart for describing a procedure for performing V2X communication or SL communication according to a transmission mode (or allocation mode). The embodiment shown in FIG. 8 may be combined with various embodiments of the present disclosure.

For convenience of description, the transmission mode in LTE is collectively referred to as the LTE transmission mode, and the transmission mode in NR is collectively referred to as the NR resource allocation mode.

For example, (a) of FIG. 8 shows UE operation related to LTE transmission mode 1, LTE transmission mode 3, or/and NR resource allocation mode 1. Here, LTE transmission mode 1 may be applied to general SL communication, and LTE transmission mode 3 may be applied to V2X communication. As another example, (b) of FIG. 7 shows a terminal operation related to LTE transmission mode 2, LTE transmission mode 4, or/and NR resource allocation mode 2.

Referring to (a) of FIG. 8, in LTE transmission mode 1, LTE transmission mode 3, or/and NR resource allocation mode 1, the base station may schedule SL resources to be used by the terminal for SL transmission.

For example, in step S8000, the base station may transmit information related to SL resources and/or information related to UL resources to the first terminal. Here, the UL resources may include resources for reporting PUCCH resources, PUSCH resources, and/or SL HARQ feedback to the base station.

For example, the first terminal may receive information related to dynamic grant (DG) resources and/or information related to configured grant (CG) resources from the base station. For example, CG resources may include CG type 1 resources or CG type 2 resources. Here, the DG resource means a resource that the base station configures/allocates to the first terminal through DCI, and the CG resource may be a (periodic) resource configured/allocated by the base station to the first terminal through a DCI and/or RRC message.

For example, the base station may transmit an RRC message including information related to CG type 1 resources to the first terminal. As another example, in the case of a CG type 2 resource, the base station may transmit an RRC message including information related to the CG type 2 resource to the first terminal, and the base station may transmit DCI related to activation or release of CG resources to the first terminal.

For example, the DCI transmitted from the base station to the first terminal may be a DCI for SL scheduling. For example, the format of the DCI may be DCI format 3_0 or DCI format 3_1.

Specifically, DCI format 3_0 may be used for scheduling of NR PSCCH and NR PSSCH in one cell. DCI format 3_0 CRC scrambled by SL-RNTI or SL-CS-RNTI may include a resource pool index, time gap, SCI format 1-A (e.g., frequency/time resource allocation), PSFCH-to-HARQ feedback timing indicator, PUCCH resource indicator, configuration index, and the like.

DCI format 3_1 may be used for scheduling of LTE PSCCH and LTE PSSCH in one cell. DCI format 3_1 scrambled by SL-L-CS-RNTI may include timing offset, carrier indicator, frequency resource location of initial transmission and retransmission, SL index, SL SPS configuration index, and the like.

In step S8010, the first terminal may transmit a physical sidelink control channel (PSCCH) to the second terminal based on resource scheduling by the base station. Here, the PSCCH may indicate resources and other transmission parameters used by the UE for the PSSCH. PSCCH transmission may be associated with DM-RS, and may transmit sidelink control information (SCI) or first stage SCI to the second terminal.

In step S8020, the first terminal may transmit a PSSCH related to the PSCCH (e.g., second stage SCI, MAC PDU, data, etc.) to the second terminal. The PSSCH may include the TB itself of data and may include control information for HARQ procedures and CSI feedback triggers. At least 6 OFDM symbols in a slot may be used for PSSCH transmission.

In step S8030, the first terminal may receive the PSFCH related to the PSCCH/PSSCH from the second terminal. The PSFCH may carry HARQ feedback (e.g., ACK/NACK information) through a sidelink from a terminal that is an intended receiver of PSSCH transmission to a terminal that has performed transmission. A PSFCH sequence may be transmitted in one PRB repeated over two OFDM symbols near the end of a sidelink resource in one slot.

In step S8040, the first terminal may transmit/report HARQ feedback information to the base station through PUCCH or PUSCH. For example, the HARQ feedback information reported to the base station may be information generated by the first terminal based on the HARQ feedback information received from the second terminal. As another example, the HARQ feedback information reported to the base station may be information generated by the first terminal based on a preconfigured rule.

Referring to (b) of FIG. 8, in LTE transmission mode 2, LTE transmission mode 4, or NR resource allocation mode 2, the terminal may determine an SL transmission resource within an SL resource set by the base station/network or a preset SL resource.

For example, SL resources configured by the base station/network or preset SL resources may be a resource pool. For example, the terminal may autonomously select or schedule resources for SL transmission. The terminal may perform SL communication by selecting a resource by itself within the configured resource pool.

As another example, the terminal may select a resource within a selection window by itself by performing a sensing and resource (re)selection procedure, and the sensing may be performed in units of subchannels.

For example, in step S8010, the first terminal that has selected a resource within the resource pool by itself may transmit a PSCCH (e.g., SCI or 1st-stage SCI) to the second terminal using the selected resource. In step S8020, the first terminal may transmit a PSSCH (e.g., 2nd-stage SCI, MAC PDU, data, etc.) related to the PSCCH to the second terminal. In step S8030, the first terminal may receive the PSFCH related to the PSCCH/PSSCH from the second terminal.

Referring to (a) or (b) of FIG. 8, a first terminal may transmit SCI to a second terminal on the PSCCH. Alternatively, for example, the first terminal may transmit two consecutive SCI (e.g., 2nd-stage SCI) to the second terminal on the PSCCH and/or the PSSCH. At this time, the second terminal may decode two consecutive SCI (e.g., 2nd-stage SCI) in order to receive the PSSCH from the first terminal.

In the present disclosure, SCI transmitted on PSCCH may be referred to as 1st SCI, 1st SCI, 1st-stage SCI, or 1st-stage SCI format, and SCI transmitted on the PSSCH may be referred to as a 2nd SCI, 2nd SCI, 2nd-stage SCI or 2nd-stage SCI format. For example, the 1st-stage SCI format may include SCI format 1-A, and the 2nd-stage SCI format may include SCI format 2-A and/or SCI format 2-B.

SCI format 1-A may be used for scheduling of PSSCH and 2nd-stage SCI on PSSCH. SCI format 1-A may include a frequency/time resource allocation field for scheduling, a resource reservation period field, a DMRS pattern field, 2nd-stage SCI format field, MCS field, additional MCS table indicator field, and PSFCH overhead indication field, DMRS port number field, etc.

Table 6 below shows an example of a 2nd-stage SCI format field.

[Table 6]

| Value of 2nd-stage SCI format field | 2nd-stage SCI format |
|---|---|
| 00 | SCI format 2-A |
| 01 | SCI format 2-B |
| 10 | reserved |
| 11 | Reserved |

SCI format 2-A may be used for decoding PSSCH, and when ACK or NACK is included in the HARQ-ACK information, only NACK is included in the HARQ-ACK information, or there is no feedback of the HARQ-ACK information, SCI format 2-A may be used with HARQ operation. SCI format 2-A may include a HARQ process number field, a new data indicator (NDI) field, a redundancy version (RV) field, a source ID field, a cast type indicator field, a CSI request field, and the like.

Table 7 below shows an example of a 2nd-stage SCI format field.

[Table 7]

| Value of the cast type indicator | Cast type |
|---|---|
| 00 | Broadcast |
| 01 | Groupcast, if ACK or NACK is included in HARQ-ACK information |
| 10 | Unicast |
| 11 | Groupcast, if HARQ-ACK information includes only NACK |

SCI format 2-B may be used for decoding PSSCH, and may be used with HARQ operation when HARQ-ACK information includes only NACK or there is no feedback of HARQ-ACK information. SCI format 2-B may include a HARQ process number field, a new data indicator (NDI) field, a redundancy version (RV) field, a source ID field, an HARQ feedback enable/disabled field, and the like.

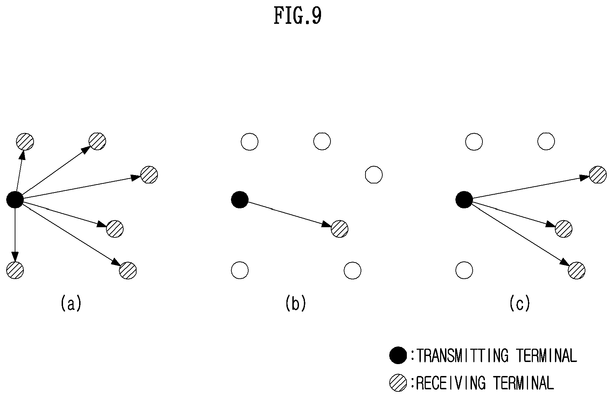

Cast types for SL communication may be classified as shown in FIG. 9. Specifically, FIG. 9(a) shows broadcast type SL communication, FIG. 9(b) shows unicast type SL communication, and FIG. 9(c) shows groupcast type SL communication.

In the case of unicast type SL communication, a terminal may perform one-to-one communication with another terminal. In the case of SL communication of the group cast type, a terminal may perform SL communication with one or more terminals in a group to which it belongs. In various embodiments of the present disclosure, SL groupcast communication may be replaced with SL multicast communication, SL one-to-many communication, and the like.

SL HARQ feedback procedure

For example, the SL HARQ feedback procedure may be applied / enabled for unicast type SL communication. At this time, in the non-CBG (code block group) operation, when the receiving terminal decodes the PSCCH targeting the receiving terminal and the receiving terminal successfully decodes the transport block related to the PSCCH, the receiving terminal may generate HARQ-ACK. And, the receiving terminal may transmit HARQ-ACK to the transmitting terminal.

On the other hand, if the receiving terminal does not successfully decode a transport block related to the PSCCH after the receiving terminal decodes the PSCCH targeting the receiving terminal, the receiving terminal may generate HARQ-NACK. And, the receiving terminal may transmit HARQ-NACK to the transmitting terminal.

As another example, SL HARQ feedback may be applied/enabled for groupcast type SL communication. For example, in non-CBG operation, the following two HARQ feedback options may be supported for groupcast type SL communication.

(1) Groupcast option 1: after the receiving terminal decodes the PSCCH targeting the receiving terminal, if the receiving terminal fails to decode a transport block related to the PSCCH, the receiving terminal may transmit HARQ-NACK to the transmitting terminal through the PSFCH.

On the other hand, if the receiving terminal decodes a PSCCH targeting the receiving terminal and the receiving terminal successfully decodes a transport block related to the PSCCH, the receiving terminal may not transmit HARQ-ACK to the transmitting terminal.

(2) Groupcast Option 2: after the receiving terminal decodes the PSCCH targeting the receiving terminal, if the receiving terminal fails to decode a transport block related to the PSCCH, the receiving terminal may transmit HARQ-NACK to the transmitting terminal through the PSFCH. In addition, when the receiving terminal decodes the PSCCH targeting the receiving terminal and the receiving terminal successfully decodes a transport block related to the PSCCH, the receiving terminal may transmit HARQ-ACK to the transmitting terminal through the PSFCH.

For example, if groupcast option 1 is used for SL HARQ feedback, all terminals performing groupcast communication may share PSFCH resources. For example, terminals belonging to the same group may transmit HARQ feedback using the same PSFCH resource.

For example, if groupcast option 2 is used for SL HARQ feedback, each terminal performing groupcast communication may use different PSFCH resources for HARQ feedback transmission. For example, terminals belonging to the same group may transmit HARQ feedback using different PSFCH resources.

Hereinafter, SL measurement and reporting will be described.

For the purpose of QoS prediction, initial transmission parameter setting, link adaptation, link management, admission control, etc., SL measurement and reporting (e.g., RSRP, RSRQ) between UEs may be considered in the SL.

For example, a receiving terminal may receive a reference signal from a transmitting terminal, and the receiving terminal may measure a channel state of the transmitting terminal based on the reference signal. And, the receiving terminal may report the CSI to the transmitting terminal.

SL-related measurement and reporting may include measurement and reporting of channel busy ratio (CBR) and reporting of location information. Examples of CSI for V2X may be CQI, PMI, RI, RSRP, RSRQ, path-gain/path-loss, SRI, CRI, interference condition, vehicle motion, and the like. CSI reporting may be activated and deactivated according to configurations.

For example, a transmitting terminal may transmit a CSI-RS to a receiving terminal, and the receiving terminal may measure CQI or RI using the CSI-RS. For example, the CSI-RS may be referred to as an SL CSI-RS. For example, the CSI-RS may be confined within PSSCH transmission. For example, the transmitting terminal may transmit the CSI-RS to the receiving terminal by including the CSI-RS on the PSSCH resource.

Hereinafter, SL congestion control (sidelink congestion control) will be described.

For example, the terminal may determine whether the energy measured in a unit time / frequency resource is above a certain level, and adjust the amount and frequency of its own transmission resources according to the ratio of unit time/frequency resources in which energy of a certain level or higher is observed. In the present disclosure, a ratio of time/frequency resources in which energy of a certain level or higher is observed may be defined as a channel busy ratio (CBR). The terminal may measure the CBR for each channel/frequency. Additionally, the terminal may transmit the measured CBR to the network/base station.

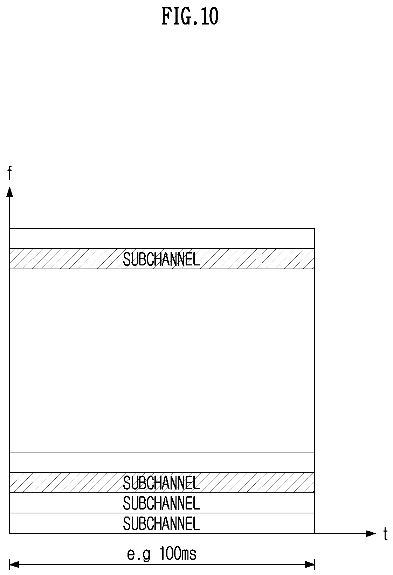

FIG. 10 illustrates a resource unit for CBR measurement according to an embodiment of the present disclosure. Referring to Figure 10, when the terminal measures RSSI in units of subchannels for a specific period (e.g., 100 ms), CBR may mean the number of subchannels for which the RSSI measurement result value is equal to or greater than a preset threshold value.

Additionally, CBR may mean a ratio of subchannels having a value equal to or greater than a preconfigured threshold among subchannels during a specific period. For example, in the embodiment of FIG. 10, when it is assumed that the hatched subchannel is a subchannel having a value equal to or greater than a preconfigured threshold, the CBR may mean a ratio of hatched subchannels during a 100 ms interval. Additionally, the terminal may report the CBR to the base station.

For example, when the PSCCH and the PSSCH are multiplexed in the frequency domain, the terminal may perform one CBR measurement for one resource pool. Here, if a PSFCH resource is configured or configured in advance, the PSFCH resource may be excluded from the CBR measurement.

Furthermore, congestion control considering the priority of traffic (e.g., packets) may be required. To this end, for example, the terminal may measure channel occupancy ratio (CR). Specifically, the terminal may measure the CBR, and the terminal may determine the maximum value ($CR_{limitk}$) of the channel occupancy ratio k ($CR_k$) that traffic corresponding to each priority (e.g., k) may occupy according to the CBR.

For example, the terminal may derive the maximum value ($CR_{limitk}$) of the channel occupancy for the priority of each traffic based on a predetermined table of CBR measurement values. For example, in the case of traffic having a relatively high priority, the terminal may derive a maximum value of a relatively large channel occupancy.

Thereafter, the terminal may perform congestion control by limiting the sum of channel occupancy of traffics having a traffic priority k lower than i to a predetermined value or less. According to this method, a stronger channel occupancy limit may be applied to traffic having a relatively lower priority.

In addition, the terminal may perform SL congestion control using methods such as transmission power size adjustment, packet drop, retransmission decision, transmission RB size adjustment (MCS adjustment), and the like.

Sidelink transmission and/or reception operation in unlicensed band

In a wireless communication system, a terminal may perform sidelink transmission and/or reception operations in an unlicensed band (or shared spectrum).

An operation in an unlicensed band may be preceded by a channel sensing operation (e.g., energy detection/measurement) for a channel to be used before transmission is performed by the terminal according to regulations or requirements for each band.

For example, if a channel or RB set to be used is determined to be idle according to a result of channel sensing (e.g., if the measured energy is below or below a certain threshold), the terminal may perform transmission based on the corresponding channel or RB set in an unlicensed band. If the channel or RB set to be used is determined to be busy according to the result of channel sensing (e.g., if the measured energy is above or above a certain threshold), the terminal may cancel all or part of the transmission operation based on the corresponding channel or RB set in the unlicensed band.

In the present disclosure, a set of RBs may mean a set or channel composed of one or more RBs (i.e., a carrier or part of a carrier composed of a set of contiguous resource blocks (RBs) on which a channel access procedure is performed in a shared spectrum). As another example, an RB set may typically have a bandwidth of 20 MHz as a unit of a frequency axis in which a channel sensing operation is performed.

In the unlicensed band, after performing a transmission operation for a specific time period, the terminal may omit or simplify the channel sensing operation (i.e., control the channel sensing period to be relatively small) within a certain period of time. As another example, the terminal may determine whether to transmit by performing a general channel sensing operation after a predetermined time has elapsed after performing the transmission operation.

In addition, each of the size and/or power spectrum density (PSD) of the time interval and/or frequency occupation area of the signal/channel transmitted by the terminal in the unlicensed band may be higher than a certain level (according to regulations or requirements).

In addition, in order to simplify channel sensing in the unlicensed band, the terminal may notify through channel occupancy time (COT) section information that it occupies a channel secured through initial general channel sensing for a certain period of time. The maximum value of the length of the COT interval may be configured differently according to the priority value of the service or data packet.

Meanwhile, the base station may share the COT interval obtained through channel sensing with the terminal through DCI, and the terminal may perform a specific (indicated) channel sensing type and / or CP extension within the COT interval based on the DCI information received from the base station.

The terminal may share the COT team obtained through channel sensing with the base station, and related information may be transmitted to the base station through CG-UCI. The base station may perform simplified channel sensing within the COT interval shared by the terminal.

In the case of SL communication, (such as Mode 1 random access (RA) operation), the terminal may receive a resource to be used for SL transmission from the base station through DCI or RRC signaling. In addition, the terminal may perform SL transmission/reception operations through a sensing operation between terminals without the help of the base station (like the Mode 2 RA operation).

In case of channel access type 1, it may be used regardless of COT configuration, and in case of channel access type 2, simplified channel access type 2 may be used before transmission within COT.

In the present disclosure, type 2A SL channel access has a sensing period of '$T_{short\_sl}$ = 25us' like type 2A DL and/or 2A UL channel access, and the sensing period may consist of '$T_f$ = 16us DURATION' and one sensing slot. '$T_f$' may be configured in a form including a sensing slot at the beginning.

Specifically, when the terminal is indicated to perform a type 2A UL channel access procedure, the terminal may perform a type 2A UL channel access procedure for UL transmission. The terminal may perform transmission immediately after sensing that the channel is idle for at least the sensing interval. $T_{short\_ul}$ consists of one sensing slot right after the duration $T_f$ = 16us, and $T_f$ may include a sensing slot at the start of $T_f$. If both sensing slots of $T_{short\_ul}$ are detected as idle, the channel may be considered idle for $T_{short\_ul}$.

And, the base station may perform DL transmission immediately after sensing the idle channel for at least the sensing interval $T_{short\_dl}$ = 25us. $T_{short\_dl}$ consists of one sensing slot right after the duration $T_f$ = 16us and $T_f$ includes the sensing slot at the beginning of $T_f$. If both sensing slots of $T_{short\_dl}$ are detected as idle, the channel may be considered idle for $T_{short\_dl}$.

In the present disclosure, type 2B SL channel access has a sensing period of '$T_{short\_sl}$ = 25us' like type 2B DL and/or 2C UL channel access, and the sensing period may consist of '$T_f$=16us DURATION' and one or more sensing slots. $T_f$ may have a form including a sensing slot at the beginning.

Specifically, when indicated to perform a type 2B UL channel access procedure for the terminal, the terminal may perform a type 2B UL channel access procedure for UL transmission. The terminal may perform transmission within a period of $T_f$ = 16us immediately after detecting that the channel is in an idle state. $T_f$ may include sensing slots occurring within the last 9us of $T_f$. If a channel is sensed to be idle for a total of at least 5 us with at least 4 us of sensing occurring in the sensing slot, then the channel may be considered idle within the period $T_f$.

And, the base station may perform DL transmission immediately after sensing that the channel is in an idle state within a period of $T_f$ = 16us. $T_f$ may include sensing slots occurring within the last 9us of $T_f$. If a channel is detected to be idle for a total of at least 5 us with at least 4 us of sensing occurring in the sensing slot, then the channel may be considered idle within the period $T_f$.

In the present disclosure, type 2C SL channel access may be configured in a form in which channel sensing is not performed, such as type 2C DL and/or 2C UL channel access, and the time period of SL transmission may be up to 584 us.

Specifically, when the UE is indicated to perform a type 2C UL channel access procedure for UL transmission, the UE may not detect the channel before transmission. In this case, the duration of the corresponding UL transmission may be up to 584 us.

And, when the base station performs a type 2C DL channel access procedure for transmission of DL transmission, the base station may not sense the channel before transmission of DL transmission. At this time, the corresponding DL transmission period may be up to 584 us.

Resource configuration method for performing SL communication

A resource pool is configured in NR SL communication, and each terminal may transmit and receive SL data within the corresponding resource pool. Information related to the resource pool may be configured for the terminal through an RRC parameter (e.g., 'SL-ResourcePool'). 'SL-ResourcePool' may include one or more RRC parameters as shown in Table 8 below.

【Table 8】

```
SL-ResourcePool information element

SL-ResourcePool-r16 ::=          SEQUENCE {

sl-PSCCH-Config-r16          SetupRelease   {   SL-PSCCH-Config-r16   }

OPTIONAL,   -- Need M
```

```
sl-PSSCH-Config-r16              SetupRelease    {    SL-PSSCH-Config-r16    }

OPTIONAL,    -- Need M

sl-PSFCH-Config-r16              SetupRelease    {    SL-PSFCH-Config-r16    }

OPTIONAL,    -- Need M

sl-SyncAllowed-r16                                     SL-SyncAllowed-r16

OPTIONAL,    -- Need M

sl-SubchannelSize-r16 ENUMERATED {n10, n12, n15, n20, n25, n50, n75, n100}

OPTIONAL,    -- Need M

dummy                                         INTEGER        (10..160)

OPTIONAL,    -- Need M

sl-StartRB-Subchannel-r16                        INTEGER    (0..265)

OPTIONAL,    -- Need M

sl-NumSubchannel-r16                                   INTEGER    (1..27)

OPTIONAL,    -- Need M

sl-Additional-MCS-Table-r16         ENUMERATED {qam256, qam64LowSE, qam256-
qam64LowSE }              OPTIONAL,    -- Need M

sl-ThreshS-RSSI-CBR-r16                          INTEGER    (0..45)

OPTIONAL,    -- Need M

sl-TimeWindowSizeCBR-r16                     ENUMERATED   {ms100,  slot100}

OPTIONAL,    -- Need M

sl-TimeWindowSizeCR-r16                      ENUMERATED   {ms1000,  slot1000}

OPTIONAL,    -- Need M

sl-PTRS-Config-r16                             SL-PTRS-Config-r16

OPTIONAL,     -- Need M

sl-UE-SelectedConfigRP-r16                   SL-UE-SelectedConfigRP-r16

OPTIONAL,    -- Need M

sl-RxParametersNcell-r16        SEQUENCE {
```

```
sl-TDD-Configuration-r16                        TDD-UL-DL-ConfigCommon

OPTIONAL,   -- Need M

sl-SyncConfigIndex-r16                            INTEGER        (0..15)}

OPTIONAL,   -- Need M

sl-ZoneConfigMCR-List-r16       SEQUENCE (SIZE (16)) OF SL-ZoneConfigMCR-

r16                        OPTIONAL,   -- Need M

sl-FilterCoefficient-r16                              FilterCoefficient

OPTIONAL,   -- Need M

sl-RB-Number-r16                              INTEGER  (10..275)

OPTIONAL,   -- Need M

sl-PreemptionEnable-r16        ENUMERATED {enabled, pl1, pl2, pl3, pl4,

pl5, pl6, pl7, pl8}        OPTIONAL,   -- Need R

sl-PriorityThreshold-UL-URLLC-r16                  INTEGER        (1..9)

OPTIONAL,   -- Need M

sl-PriorityThreshold-r16                          INTEGER        (1..9)

OPTIONAL,   -- Need M

sl-X-Overhead-r16                    ENUMERATED {n0,n3,  n6,  n9}

OPTIONAL,   -- Need S

sl-PowerControl-r16                              SL-PowerControl-r16

OPTIONAL,   -- Need M

sl-TxPercentageList-r16                          SL-TxPercentageList-r16

OPTIONAL,   -- Need M

sl-MinMaxMCS-List-r16                            SL-MinMaxMCS-List-r16

OPTIONAL,   -- Need M

   ...,

   [[

   sl-TimeResource-r16        BIT    STRING    (SIZE    (10..160))
```

```
OPTIONAL      -- Need M

    ]],

    [[

    sl-PBPS-CPS-Config-r17      SetupRelease  {  SL-PBPS-CPS-Config-r17  }

OPTIONAL,    -- Need M

    sl-InterUE-CoordinationConfig-r17      SetupRelease  {  SL-InterUE-

CoordinationConfig-r17 } ...}
```

Here, 'sl-NumSubchannel' indicates the number of subchannels of a corresponding resource pool composed of only contiguous PRBs. 'sl-RB-Number' indicates the number of PRBs in the resource pool consisting only of adjacent PRBs, and the remaining RBs cannot be used. 'sl-StartRB-Subchannel SL BWP' indicates the lowest RB index of the subchannel having the lowest index in the resource pool with respect to the lowest RB index of the SL BWP. 'sl-SubchannelSize' indicates the minimum granularity of the frequency domain for sensing for PSSCH resource selection in units of PRBs. 'sl-TimeResource' indicates a bitmap of a resource pool defined by periodically repeating the bitmap during an SFN or DFN period. Hereinafter, in performing a channel access procedure of an unlicensed band, a resource pool and/or subchannel configuration/configuration method of sidelink communication based on an RB set, which is a basic frequency unit, will be described. In addition, an operation of a UE when a channel access procedure succeeds only in some RB sets among sidelink resource regions composed of a plurality of RB sets will be described.

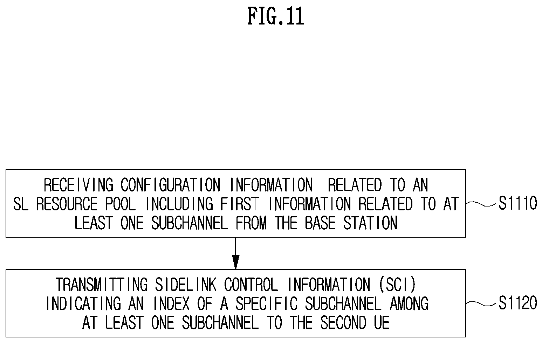

FIG. 11 is a diagram for describing an operation of a first user equipment (UE) performing SL communication in a wireless communication system to which the present disclosure may be applied.

In describing the present disclosure, an RB-interlace (or an interlace in units of RBs) may include RB groups spaced at equal intervals within a frequency band, and each RB group may include one or more (consecutive) RBs.

For example, based on the interval of RBs constituting the RB-interlace being M (M is a natural number greater than or equal to 1), the mth RB-interlace may be composed of $\{m, M+m, 2M+m, ... (k-1)M+m, kM+m\}$ RBs. That is, the m-th RB-interlace may be composed of $\{m, M+m, 2M+m, ... (k-1)M+m, kM+m\}$-th index RBs (i.e., unit RB groups). m is one of $\{0, 1, ..., M-1\}$, and k may be a natural number greater than or equal to 1.

The first UE (or transmitting terminal) may receive configuration information (e.g., 'SL-ResourcePool') related to an SL resource pool including first information related to at least one subchannel from the base station (S1110).

For example, the first information may include the number of at least one subchannel of the corresponding resource pool, the lowest RB index of the subchannel having the lowest index in the resource pool for the lowest RB index of the SL BWP, or minimum granularity of the frequency domain for sensing for PSSCH resource selection in units of PRBs.

Here, at least one subchannel may be configured based on at least one resource block (RB)-interlace. That is, a unit constituting a unit subchannel may be an RB-interlace. And, at least one subchannel may be configured on an unlicensed band for sidelink communication.

And, the configuration information may include the number of at least one RB-interlace and an index of a starting interlace. A size of each of the at least one subchannel may be determined based on the number of at least one RB-interlace.

As another example, apart from the first information, configuration information including the number of at least one RB-interlace and an index of a starting interlace may be transmitted from the base station to the first UE.

As an example of the present disclosure, each index of at least one subchannel may correspond to each index of at least one RB-interlace. That is, one subchannel index may correspond to each RB-interlace index composed of a plurality of RB sets.

As another example of the present disclosure, an index of each of at least one subchannel may correspond to each of at least one RB belonging to a specific RB set among a plurality of RB sets included in at least one RB-interlace.

For example, an index of some of at least one subchannel may correspond to each of at least one RB belonging to a first RB set among a plurality of RBs included in each of at least one RB-interlace, and an index of the rest of the at least one subchannel may correspond to each of at least one RB belonging to the second RB set among a plurality of RBs included in each of the at least one RB-interlace.

As another example, an index of a first subchannel among at least one subchannel may correspond to at least one RB belonging to a first RB set among a plurality of RBs included in the first RB-interlace, and an index of a second subchannel among at least one subchannel may correspond to at least one RB belonging to a second RB set among a plurality of RBs included in the second RB-interlace.

The first UE may transmit sidelink control information (SCI) indicating an index of a specific subchannel among at least one subchannel to the second UE (S1120).

Here, a specific subchannel may be indicated through a frequency resource assignment field included in SCI. The first terminal may transmit sidelink data to the second terminal (or the receiving terminal) based on the SCI (through a specific subchannel) .

In this case, the sidelink data may include an SL signal/channel such as a physical sidelink shared channel (PSSCH) .

As an example of the present disclosure, if a channel access procedure for a third RB set among at least one RB set corresponding to a specific subchannel is not successful, the first UE may not transmit sidelink data to the second UE through a specific subchannel. That is, when the channel access procedure does not succeed even in part of at least one RB set corresponding to a specific subchannel, the first UE may drop sidelink data.

Success of the channel access procedure for the RB set may mean that transmission is allowed in the RB set as a result of channel sensing. Here, the channel access procedure refers to a sensing-based procedure for evaluating the availability of a channel for performing transmission. The basic unit of sensing is a sensing slot whose duration is $T_{sl}$=9us.

Specifically, when the base station / UE (e.g., the first UE / the second UE) senses the channel during the sensing slot period, and determines that the power detected for at least 4 us within the sensing slot period is less than the energy detection threshold, the sensing slot period $T_{sl}$ may be considered idle. Otherwise (that is, when the base station/UE determines that the power detected for at least 4us within the sensing slot period is equal to or greater than the energy detection threshold), the sensing slot period $T_{sl}$ may be considered busy.

As another example, when a channel access procedure for a third RB set among at least one RB set corresponding to a specific subchannel succeeds, the first UE may transmit sidelink data to the second terminal through the third RB set. In this case, all information on sidelink data may be mapped to the third RB set.

As another example, information on the same sidelink data may be mapped to the entire set of at least one RB corresponding to a specific subchannel. That is, even if the channel access procedure does not succeed for some of the at least one RB set, the first UE may transmit sidelink data to the second UE based on the RB set for which the channel access procedure succeeds.

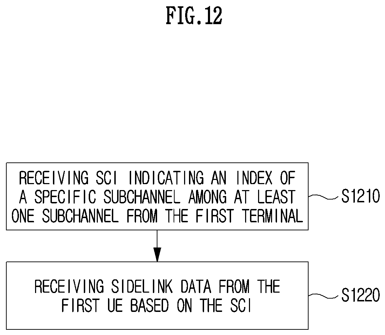

FIG. 12 is a diagram for describing an operation of a second UE performing SL communication in a wireless communication system to which the present disclosure may be applied.

The second UE may receive sidelink control information (SCI) indicating an index of a specific subchannel among at least one subchannel from the first terminal (S1210). At this time, the SCI may be transmitted from the first terminal to the second terminal through the PSCCH.

At least one subchannel may be configured based on an index of at least one RB-interlace. At least one subchannel may be configured based on configuration information related to the SL resource pool received from the base station. The configuration information may include the number of at least one RB-interlace and an index of a starting interlace.

The second UE may receive sidelink data from the first UE based on SCI (S1220).

Since the operation of transmitting the sidelink from the first UE to the second UE has been described with reference to FIG. 11, duplicate descriptions will be omitted.

Hereinafter, in performing a channel access procedure of an unlicensed band, i) a resource pool and/or subchannel configuration/configuration method of sidelink communication based on RB sets and ii) an operation of a UE when a channel access procedure succeeds only in some specific RB sets will be described in detail.

Embodiment 1

Embodiment 1 relates to a method of configuring a resource pool and/or a subchannel based on an RB set. A frequency domain of a resource pool that is not limited to an RB set may be configured by reusing configurations in basic SL communication as much as possible. That is, it may be allowed that the frequency domain of the resource pool overlaps with a plurality of RB sets.

For example, a resource pool consisting of 100 RBs may be configured in the SL BWP of an unlicensed band in which 30 kHz SCS is configured, and the 100 RBs may overlap with two RB sets.

A resource pool configuration method that is not limited to RB sets, such as the resource pool configuration method, may be undesirable when considering operation of an unlicensed band in which independent channel sensing is performed for each RB set. This is because, even if a resource pool overlapping with two RB sets is configured, the idle/busy state of a channel for each RB set may be different, and thus whether transmission is possible for each RB set may be different.

Accordingly, frequency domain resources of a resource pool configured in an unlicensed band may be configured within one RB set. For example, when 51 RBs are configured in the RB set in the SL BWP of an unlicensed band in which 30 kHz SCS is configured, a rule may be established that the SL resource pool configured in the corresponding BWP consists of 51 or fewer RBs.

Additionally or alternatively, a rule may be established that frequency domain resources of a resource pool configured in an unlicensed band are configured equal to one RB set.

As another example, when the RB set is configured to 51 RBs in the SL BWP of an unlicensed band in which 30 kHz SCS is configured, a rule may be established that the SL resource pool configured in the corresponding BWP consists of only 51 RBs.

Embodiment 1-1

Regarding unlicensed bands, there may be regulations related to restrictions on the size and/or power spectral density (PSD) of frequency occupied area/occupied channel bandwidth (OCB) for each region.

For example, there may be a restriction that 80% or more of the frequency domain of the frequency bandwidth operating in relation to the unlicensed band must be occupied or/and a restriction that the PSD per 1 MHz must be maintained below a specific value. In consideration of this, an interlace-based frequency axis resource allocation method may be applied to NR-U link communication on an unlicensed band.

Specifically, multiple interlaces of RBs may be defined. Interlace m $\in$ {0, 1, ... M-1} may be composed of common resource blocks {m, M + m, 2M + m, 3M + m, ...}, and M represents the spacing of RBs constituting the RB-interlace given by Table 9.

[Table 9]

| μ | M |
|---|---|
| 0 | 10 |
| 1 | 5 |

The relationship between the interlaced resource block ( $n_{\text{IRB},m}^{\mu} \in \{0,1,...\}$ ) and the common resource block ( $n_{\text{CRB}}^{\mu}$ ) of BWP i and interlace m may be given as in Equation 3.

【Equation 3】

$$n_{\text{CRB}}^{\mu} = M n_{\text{IRB},m}^{\mu} + N_{\text{BWP},i}^{\text{start},\mu} + \left( \left( m - N_{\text{BWP},i}^{\text{start},\mu} \right) \bmod M \right)$$

$N_{\text{BWP},i}^{\text{start},\mu}$ refers to a common resource block in which a bandwidth part starts based on common resource block 0. If there is no risk of confusion, the index μ may be dropped. The UE can expect that the number of common resource blocks in the interlace included in BWP i is 10 or more.

If the above-described interlace structure is also applied to unlicensed band sidelink communication, sub-channels may be configured in units of RB-interlaces (within one RB set).

As an example, when the SL BWP of the unlicensed band configured to 30 kHz SCS is configured to 51 RBs (i.e., 1 RB set) (or when an SL resource pool, which is a frequency axis resource, is set with 51 RBs), one RB-interlace may consist of 10 or 11 RBs as an interval of 5 RBs (i.e., M value in Table 8) is applied.

For example, an RB-interlace consisting of 11 RBs may be configured such as {RB INDEX #0, RB INDEX #5, RB INDEX #10, ..., RB INDEX #50}, and an RB-interlace consisting of 10 RBs may be configured such as {RB INDEX#1, RB INDEX#6, RB INDEX #11, ..., RB INDEX #46}.

Embodiment 1-2

As a specific method of configuring a subchannel, a subchannel size may be determined through the number of RB-interlaces, and a starting RB-interlace INDEX may be additionally configured.

As an example, the resource of the subchannel frequency domain (or axis) in which the Starting RB-interlace index is configured to 0 and the number of RB-interlaces is configured to 2 may be a union of frequency domain (or axial) resources corresponding to RB-interlace INDEX #0 and frequency domain (or axial) resources corresponding to RB-interlace INDEX #1.

As another example, when a resource pool (or SL BWP) consisting of a plurality of RB sets is configured, the following two options may be considered.

Option 1: One subchannel index may be configured to correspond to each RB-interlace index composed of a plurality of RB sets (such as an RB-interlace structure in an NR-Uu link of an unlicensed band).

Option 2: One subchannel index may be configured to separately correspond to RBs confined within one RB set of a specific RB-interlace.

Option 2 may be divided into the following three options according to the indexing method between RB-interlace and subchannel.

Option 2-1: After indexing between RB-interlace and subchannels is completed targeting RBs limited to a specific RB set among RBs belonging to RB-interlace, indexing may be performed between RB-interlaces and subchannels targeting RBs limited to the next RB set.

For example, it is assumed that five RB-interlaces (e.g., RB-interlace indices #0/#1/#2/#3/#4) are configured. Each RB belonging to RB set index #0 among RB-interlace index #0/#1/#2/#3/#4 may correspond to each subchannel index #0/#1/#2/#3/#4. In addition, each RB belonging to RB set index #1 among the RB-interlace index #0/#1/#2/#3/#4 may be indexed by corresponding to each of subchannel indices #5/#6/#7/#8/#9.

Option 2-2: RB-interlaces may be indexed by hopping the RB set.

For example, it is assumed that 3 RB sets are configured and 5 RB-interlaces are configured in each RB set. Among the RBs belonging to RB-interlace index #0, subchannel index #0 may first correspond to RBs belonging to RB set index #0. And, indexing may be performed by matching subchannel index #1 to RBs belonging to RB set index #1 among RBs belonging to RB-interlace index #0.

Option 2-3: Indexing is performed between the RB-interlace and the subchannel for RBs limited to one RB set among RBs belonging to the RB-interlace, but individual subchannel indexing may be performed for each RB set.

For example, it is assumed that 5 RB-interlaces are configured. Subchannel index #0/#1/#2/#3/#4 may be corresponded to each of RBs belonging to RB set index #0 among RB-interlace index #0/#1/#2/#3/#4. And, indexing may be performed by matching subchannel indices #0/#1/#2/#3/#4 to each of RBs belonging to RB set index #1 among RB-interlace index #0/#1/#2/#3/#4.

In the case of option 1 or/and option 2-3, a subchannel index and/or an RB set index may be indicated through a frequency resource assignment field of SCI format 1-A. Additionally or alternatively, consecutive RB set indexes may be indicated in the RIV method, and RB set indexes may be indicated in the bitmap method.

In the case of option 2-1 or/and option 2-2, the subchannel index may be indicated through the frequency resource allocation field of SCI format 1-A. Additionally or alternatively, subchannel indices may be indicated in a RIV scheme or a bitmap scheme.

Embodiment 1-3

A subchannel may be configured in units of RB sets. As a method of configuring a subchannel, a subchannel size may be determined based on the number of RB sets, and a starting RB set index may be additionally configured.

For example, the resource in the frequency domain of a subchannel in which the starting RB set index is configured to 1 and the number of RB sets is configured to 2 may be a union of frequency-axis resources corresponding to RB set INDEX #1 and frequency-axis resources corresponding to RB set INDEX #2 (and / or RBs corresponding to the intra-cell guard band between the consecutive RB sets).

Additionally or alternatively, when the subchannel size is configured to the number of RBs, the maximum subchannel size and/or subchannel allocation position may be determined according to the RB set size for each SCS. For example, when the size of the frequency domain of the resource pool is limited to within a single RB set, the maximum subchannel size may be differently defined according to the SCS.

For example, it is assumed that in the case of 15 kHz SCS, up to 100 RBs may be configured in one RB set, and in the case of 30 kHz SCS, up to 50 RBs may be configured in one RB set. In this case, the maximum number of RBs of the resource pool size that may be configured may be 100 RBs in case of 15 kHz SCS and 50 RBs in case of 30 kHz SCS.

As another example, when the maximum subchannel size may be configured to be the same regardless of the SCS, the subchannel (having the maximum size or each) may be limited to overlap with the minimum set of RBs.

For example, when a 30 kHz SCS SL BWP with an 80 MHz bandwidth is configured and a subchannel with a size of 75 RBs is configured, the corresponding subchannels may be configured to overlap up to 3 RB sets. When a constraint that the number of overlapping RB sets should be minimized (considering that channel sensing is performed for each RB set) is defined, the constraint may be defined to overlap with two RB sets of the corresponding subchannel.

That is, when a subchannel with a size of 75 RBs is configured for 30 kHz SCS SL BWP, the UE may expect that the corresponding subchannel is configured to overlap two RB sets. In addition, the UE may assume that a subchannel that is not configured as described above (e.g., a subchannel configured to overlap with a set of 3 RBs) is invalid.

Embodiment 2

Embodiment 2 relates to an operation of a terminal considering success or failure of a channel access procedure for each RB set.

SL signals/channels such as PSSCH/PSCCH transmitted by the UE may be configured/scheduled across a plurality of RB sets. At this time, if the channel access procedure succeeds only in some RB sets, transmission may be allowed only in the corresponding RB set(s). Hereinafter, the operation of the UE when the channel access procedure succeeds only in some RB sets will be described.

Embodiment 2-1

It is assumed that the channel access procedure is not successful even in one RB set of the SL signal/channel (e.g., PSSCH, PSCCH, SL CSI-RS, SL DM-RS, etc.) transmission time points overlapped with a plurality of RB sets. At this time, in order to simplify/reduce implementation complexity of the terminal, a rule may be defined to drop and not transmit the entire corresponding SL signal/channel.

Additionally or alternatively, if the channel access procedure succeeds even in some RB sets among the SL signal/channel transmission points overlapping with the plurality of RB sets, transmission of the SL signal/channel may be allowed even in an RB set (or a part of the RB set) in which the corresponding channel access procedure has succeeded.

At this time, a condition that a specific channel/information should be included in the corresponding transmission RB set may be configured/defined. For example, when the channel access procedure for the RB set (s) including the PSCCH (or/and 2nd-stage SCI) is successful, transmission of the SL signal/channel may be allowed.

As an example, it is assumed that a terminal performing channel sensing for PSSCH/PSCCH transmission overlapped with RB set #0/#1/#2 succeeds in the channel access procedure in RB set #0/#1 at this transmission time, but fails in RB set #2. The terminal may perform transmission on RB set #0 (or/and RB set #1 (not loaded with PSCCH)) in which all RBs corresponding to the PSCCH are limited.

At this time, the terminal may transmit only the PSCCH and may not transmit other SL signals/channels. Additionally or alternatively, a rule may be defined (or performed by the terminal implementation) to transmit all SL signals/channels mapped to RB set #0 (or/and RB set #1) through which the UE transmits (or/and drop all SL signals/channels mapped to the RB set(s) not performing transmission).

Embodiment 2-2

It is assumed that the channel access procedure succeeds even in some RB sets among the SL signal/channel transmission timings overlapped with a plurality of RB sets.

If transmission on the SL signal / channel is allowed in the RB set (or some RB sets thereof) that have succeeded in the channel access procedure, in order to minimize an effect due to an RB set that is not actually transmitted, the same SL signal/channel may be configured for each RB set.

For example, a terminal performing channel sensing to perform PSCCH/PSSCH transmission through sub-channels overlapping RB sets #0/#1/#2 may map the same PSCCH information for each RB set. For example, the terminal may map the same PSCCH consisting of 20 RBs and 2 symbols to each of RB sets #0/#1/#2.

According to the above method, when the channel access procedure succeeds (in some RB sets) and the SL signal / channel (e.g., PSSCH) is transmitted in the corresponding RB set, at least the corresponding SL signal channel (e.g., PSCCH) may be transmitted without loss.

As another example, a terminal performing channel sensing to perform PSCCH/PSSCH transmission through a subchannel overlapped with RB set #0/#1/#2 may map the same 2nd-stage SCI information for each RB set.

According to the above method, even if any RB set is transmitted after the channel access procedure is successful (in some RB sets), at least 2nd-stage SCI may be transmitted without loss.

As another example, a terminal performing channel sensing for PSCCH/PSSCH transmission through sub-channels overlapping RB sets #0/#1/#2 may map the same PSSCH information for each RB set (or/and map RV differently even if the same TB information is loaded for each RB set).

According to the above method, even if some RB sets are transmitted after the channel access procedure is successful (in some RB sets), at least PSSCH can be transmitted without loss.

As another example, a terminal performing channel sensing for PSCCH/PSSCH transmission through sub-channels overlapping RB sets #0/#1/#2 may map the same CSI feedback information for each RB set.

According to the above-described method, even if some RB sets are transmitted after the channel access procedure is successful (in some RB sets), at least CSI feedback information may be transmitted without loss.

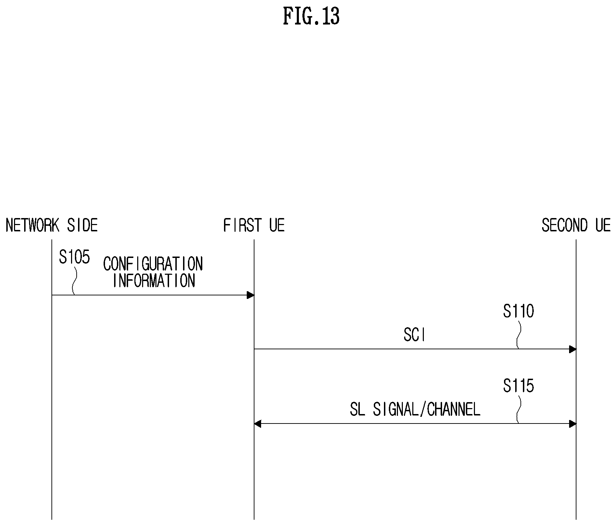

FIG. 13 is a diagram for describing a signaling procedure of a first UE, a second UE, and a network side according to an embodiment of the present disclosure.

FIG. 13 shows an example of signaling between a network side and a terminal (UE) in an M-TRP environment (or S-TRP environment) to which embodiments (e.g., embodiment 1, embodiment 1-1, embodiment 1-2, embodiment 1-3, embodiment 2, embodiment 2-1, embodiment 2-2, or a combination of one or more of the detailed embodiments thereof) of the present disclosure described above may be applied.

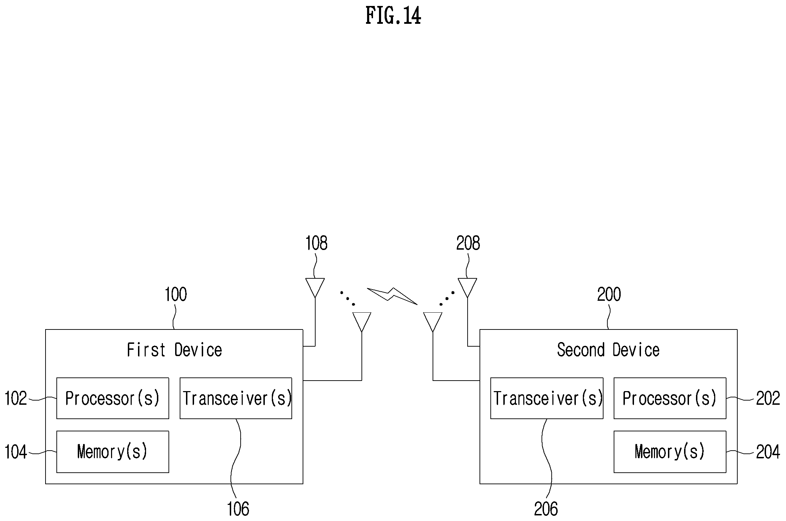

Here, the UE/network side is exemplary, and may be replaced with various devices to be described with reference to FIG. 14. FIG. 13 is for convenience of description, and does not limit the scope of the present disclosure. Also, some step(s) shown in FIG. 13 may be omitted depending on circumstances and/or settings. In addition, in the operation of the network side/UE of FIG. 13, the above-described uplink transmission/reception operation and the like may be referred to or used.

Here, the network side may be one base station including a plurality of TRPs, or may be one cell including a plurality of TRPs. Alternatively, the network side may include a plurality of remote radio heads (RRHs)/remote radio units (RRUs).

As an example, an ideal/non-ideal backhaul may be configured between TRP 1 and TRP 2 included in the network side. In addition, although the following description is based on a plurality of TRPs, such description may be equivalently extended and applied to transmission through a plurality of panels/cells, and may also be extended and applied to transmission through a plurality of RRHs/RRUs.

In addition, although described with reference to "TRP" in the following description, "TRP" may be replaced with and applied to a panel, an antenna array, a cell (e.g., a macro cell/small cell/pico cell, etc.), TP (transmission point), base station (base station, gNB, etc.) as described above. As described above, the TRP may be distinguished according to information (e.g., CORESET index, ID) on the CORESET group (or CORESET pool).

As an example, when one UE is configured to perform transmission and reception with a plurality of TRPs (or cells), this may mean that a plurality of CORESET groups (or CORESET pools) are configured for the one UE. The configuration of such CORESET group (or CORESET pool) may be performed through higher layer signaling (e.g., RRC signaling, etc.).

In addition, the base station may mean a generic term for an object that transmits/receives data to and from the UE. For example, the base station may be a concept including one or more TPs (Transmission Points), one or more TRPs (Transmission and Reception Points), or the like. In addition, the TP and/or TRP may include a panel, a transmission and reception unit, and the like of the base station.

The first UE may receive configuration information from the network side (S105).

For example, the configuration information may include information related to network-side configuration (i.e., TRP configuration), resource allocation information related to transmission and reception based on M-TRP, and the like. The configuration information may be transmitted through higher layers (e.g., RRC, MAC CE). The configuration information may include information related to uplink transmission based on a configured grant (CG). In addition, when the setting information is defined or set in advance, the corresponding step may be omitted.

As another example, the configuration information may include information related to an SL resource pool (e.g., 'SL-ResourcePool'). Information related to the SL resource pool may include information indicating the number of subchannels of the corresponding resource pool, information representing a bitmap of a resource pool, information indicating the minimum granularity of the frequency domain for sensing for PSSCH resource selection in units of PRBs, information indicating the number of PRBs in the corresponding resource pool, and information indicating a starting RB, etc.

As another example, the configuration information may include information for configuring the SL BWP. A UE and/or device may transmit and receive an SL channel/signal on the SL BWP configured by the configuration information.

As another example, the configuration information may include information related to at least one subchannel configured based on an RB interlace. For example, the configuration information may include information on the number of RB interlaces, a starting RB-interlace index, and the like.

Here, a frequency axis resource region for SL transmission may be configured based on embodiments (e.g., embodiment 1, embodiment 1-1, embodiment 1-2, embodiment 1-3, embodiment 2, embodiment 2-1, embodiment 2-2 or/and one of its detailed embodiments combination of above) of the present disclosure.

For example, an operation that UE (100 or 200 in FIG. 14) in the above-described stage S105 receives the configuration information from a network side (200 or 100 in FIG. 14) may be implemented by a device in FIG. 14 which will be described after. For example, in reference to FIG. 14, at least one processor 102 may control at least one transceiver 106 and/or at least one memory 104, etc. to receive the configuration information and at least one transceiver 106 may receive the configuration information from a network side.

The first UE may transmit sidelink control information (SCI) to the second UE (S110).

For example, SCI is divided into 1st-stage SCI and 2nd-stage SCI, and a first UE may transmit (continuous) 1st-stage SCI and/or 2nd-stage SCI to a second UE. The 1st-stage SCI may include SCI format 1-A, and the 2nd-stage SCI format may include SCI format 2-A and/or SCI format 2-B. SCI format 1-A is used when scheduling the PSSCH, and SCI format 2-A and SCI format 2-B can be used when decoding the PSSCH.

As another example, the SCI may include information (e.g., a frequency resource allocation field) indicating a specific subchannel among at least one subchannel (configured by configuration information). In addition, when the SCI is defined or configured in advance, the corresponding step may be omitted.

For example, an operation that UE (100 or 200 in FIG. 14) in the above-described stage S110 transmits the SCI to a network side (200 or 100 in FIG. 14) may be implemented by a device in FIG. 14 which will be described after. For example, in reference to FIG. 14, at least one processor 102 may control at least one transceiver 106 and/or at least one memory 104, etc. to transmit the SCI and at least one transceiver 106 may transmit the SCI to a network side.

The first UE may transmit the SL signal/channel to the second UE or receive it from the second UE (S115).

The first UE may transmit or receive the SL signal/channel scheduled based on the SCI to the second UE. At this time, the first UE may transmit/receive the SL signal/channel based on whether the channel access procedure is successful for each RB set.

As an example, it is assumed that SL signals/channels such as PSSCH/PSCCH are scheduled across a plurality of RB sets. For example, when the channel access procedure is not successful in some RBs of a plurality of RB sets, the first UE may drop the entire corresponding SL signal/channel. As another example, if the channel access procedure is successful in some RBs of a plurality of RB sets and the SL signal / channel is completely included in the RB set, the first UE may transmit the SL signal/channel to the second UE in the corresponding RB set. As another example, the first UE may map the same SL signal/channel information to an RB set in which the channel access procedure is successful.

For example, an operation in which the first UE (100 or 200 in FIG. 14) transmits the SL signal/channel to the second UE (200 or 100 in FIG. 14) or receives the SL signal/channel from the second UE (200 or 100 in FIG. 14) in step S115 described above may be implemented by the device of FIG. 14 to be described below.

For example, referring to Figure 14, one or more processors 102 may control one or more transceivers 106 and/or one or more memories 104, etc. to transmit or receive SL signals/channels, and one or more transceivers 106 may transmit SL signals/channels to or receive SL signals/channels from the second UE.

General Device to which the Present Disclosure may be applied

FIG. 14 is a diagram which illustrates a block diagram of a wireless communication system according to an embodiment of the present disclosure.

In reference to FIG. 14, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs (Application Specific Integrated Circuit), one or more DSPs(Digital Signal Processor), one or more DSPDs(Digital Signal Processing Device), one or more PLDs (Programmable Logic Device) or one or more FPGAs (Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for a first user equipment, UE, (100) to perform sidelink, SL, communication in a wireless communication system, the method comprising:

   receiving (S1110) configuration information related to an SL resource pool including first information related to at least one subchannel from a base station; and
   transmitting (S1120) sidelink control information, SCI, indicating an index of a specific subchannel among the at least one subchannel to a second UE (200),
   wherein the at least one subchannel is configured based on at least one resource block, RB,-interlace,

the configuration information includes a number of the at least one RB-interlace and an index of a starting interlace, and

**characterized in that**

sidelink data is not transmitted to the second UE through the specific subchannel based on an unsuccessful channel access procedure for a third RB set among at least one RB set corresponding to the specific subchannel.

2. The method of claim 1, wherein:
each index of the at least one subchannel corresponds to each index of the at least one RB-interlace.

3. The method of claim 1, wherein:
an index of each of the at least one subchannel corresponds to each of at least one RB belonging to a specific RB set among a plurality of RB sets included in the at least one RB-interlace.

4. The method of claim 1, wherein:

an index of some of the at least one subchannel corresponds to each of at least one RB belonging to a first RB set among a plurality of RBs included in each of the at least one RB-interlace, and

an index of remaining of the at least one subchannel corresponds to each of at least one RB belonging to a second RB set among a plurality of RBs included in each of the at least one RB-interlace.

5. The method of claim 1, wherein:

an index of a first subchannel among the at least one subchannel corresponds to at least one RB belonging to a first RB set among a plurality of RBs included in the first RB-interlace, and

an index of a second subchannel among the at least one subchannel corresponds to at least one RB belonging to a second RB set among a plurality of RBs included in the second RB-interlace.

6. The method of claim 1, wherein:

the specific subchannel is indicated through a frequency resource assignment field included in the SCI, and sidelink data is transmitted from the first UE to the second UE through the specific subchannel.

7. The method of claim 1, wherein:
a size of each of the at least one subchannel is determined based on the number of the at least one RB-interlace.

8. The method of claim 1, wherein:

based on a success of the channel access procedure for the third RB set among the at least one RB set corresponding to the specific subchannel, sidelink data is transmitted from the first UE to the second UE through the third RB set, and

information on the sidelink data is mapped to the third RB set.

9. The method of claim 8, wherein:
information on the same sidelink data is mapped to the entire set of at least one RB corresponding to the specific subchannel.

10. The method of claim 1, wherein:
sidelink data transmitted to the second UE by the first UE based on the SCI includes a physical sidelink shared channel, PSSCH.

11. The method of claim 1, wherein:
the at least one subchannel is configured on an unlicensed band for sidelink communication.

12. The method of claim 1, wherein:

based on an interval of the RBs constituting the at least one RB-interlace being M, mth RB-interlace consists of {m, M+m, 2M+m, ... (k-1)M+m, kM+m} RBs, and

the m is one of {0, 1, ..., M-1}, and k is a natural number greater than or equal to 1.

**13.** A first user equipment, UE, (100) performing sidelink, SL, communication in a wireless communication system, the first UE comprising:

at least one transceiver (106); and
at least one processor (102) coupled to the one or more transceivers;
wherein the one or more processor is configured to:

receive (S1110), through the at least one transceiver, configuration information related to an SL resource pool including first information related to at least one subchannel from a base station; and
transmit (S1120), through the at least one transceiver, sidelink control information, SCI, indicating an index of a specific subchannel among the at least one subchannel to a second UE (200),

wherein the at least one subchannel is configured based on at least one resource block, RB,-interlace,
the configuration information includes a number of the at least one RB-interlace and an index of a starting interlace, and
**characterized in that** the processor is further configured to not transmit sidelink data to the second UE through the specific subchannel based on an unsuccessful channel access procedure for a third RB set among at least one RB set corresponding to the specific subchannel.

**Patentansprüche**

**1.** Verfahren, für eine erste Benutzerausrüstung, UE, (100) zum Durchführen einer Sidelink-Kommunikation, SL-Kommunikation, in einem Drahtloskommunikationssystem, wobei das Verfahren umfasst:

Empfangen (S1110) von Konfigurationsinformationen, die sich auf einen SL-Ressourcenpool beziehen, einschließlich erster Informationen, die sich auf mindestens einen Unterkanal beziehen, von einer Basisstation und Übertragen (S1120) von Sidelink-Steuerinformationen, SCI, die einen Index eines spezifischen Unterkanals unter dem mindestens einen Unterkanal angeben, an eine zweite UE (200),
wobei der mindestens eine Unterkanal basierend auf mindestens einem Ressourcenblock-Interlace, RB-Interlace, konfiguriert ist,
wobei die Konfigurationsinformationen eine Anzahl des mindestens einen RB-Interlace und einen Index eines Start-Interlace einschließen, und
**dadurch gekennzeichnet, dass**
Sidelink-Daten nicht durch den spezifischen Unterkanal basierend auf einer erfolglosen Kanalzugriffsprozedur für einen dritten RB-Satz unter mindestens einem RB-Satz, der dem spezifischen Unterkanal entspricht, an die zweite UE übertragen werden.

**2.** Verfahren nach Anspruch 1, wobei:
jeder Index des mindestens einen Unterkanals jedem Index des mindestens einen RB-Interlace entspricht.

**3.** Verfahren nach Anspruch 1, wobei:
ein Index jedes des mindestens einen Unterkanals jedem von mindestens einem RB entspricht, der zu einem spezifischen RB-Satz unter einer Vielzahl von RB-Sätzen gehört, die im mindestens einen RB-Interlace enthalten sind.

**4.** Verfahren nach Anspruch 1, wobei:

ein Index einiger des mindestens einen Unterkanals jedem von mindestens einem RB entspricht, der zu einem ersten RB-Satz unter einer Vielzahl von RBs gehört, die in jedem des mindestens einen RB-Interlace enthalten sind, und
ein Index Verbleibender des mindestens einen Unterkanals jedem von mindestens einem RB entspricht, der zu einem zweiten RB-Satz unter einer Vielzahl von RBs gehört, die in jedem des mindestens einen RB-Interlace enthalten sind.

**5.** Verfahren nach Anspruch 1, wobei:

ein Index eines ersten Unterkanals unter dem mindestens einen Unterkanal mindestens einem RB entspricht, der zu einem ersten RB-Satz unter einer Vielzahl von RBs gehört, die im ersten RB-Interlace enthalten sind, und ein Index eines zweiten Unterkanals unter dem mindestens einen Unterkanal mindestens einem RB entspricht, der zu einem zweiten RB-Satz unter einer Vielzahl von RBs gehört, die im zweiten RB-Interlace enthalten sind.

6. Verfahren nach Anspruch 1, wobei:

der spezifische Unterkanal durch ein Frequenzressourcenzuweisungsfeld angegeben wird, das in den SCI enthalten ist, und
Sidelink-Daten von der ersten UE zur zweiten UE durch den spezifischen Unterkanal übertragen werden.

7. Verfahren nach Anspruch 1, wobei:
eine Größe jedes des mindestens einen Unterkanals basierend auf der Anzahl des mindestens einen RB-Interlace bestimmt wird.

8. Verfahren nach Anspruch 1, wobei:

basierend auf einem Erfolg der Kanalzugriffsprozedur für den dritten RB-Satz unter dem mindestens einen RB-Satz, der dem spezifischen Unterkanal entspricht, Sidelink-Daten von der ersten UE zur zweiten UE durch den dritten RB-Satz übertragen werden und
Informationen über die Sidelink-Daten dem dritten RB-Satz zugeordnet werden.

9. Verfahren nach Anspruch 8, wobei:
Informationen über die gleichen Sidelink-Daten dem gesamten Satz von mindestens einem RB, der dem spezifischen Unterkanal entspricht, zugeordnet werden.

10. Verfahren nach Anspruch 1, wobei:
Sidelink-Daten, die durch die erste UE basierend auf den SCI an die zweite UE übertragen werden, einen gemeinsam genutzten physischen Sidelink-Kanal, PSSCH, einschließen.

11. Verfahren nach Anspruch 1, wobei:
der mindestens eine Unterkanal auf einem unlizenzierten Band für eine Sidelink-Kommunikation konfiguriert ist.

12. Verfahren nach Anspruch 1, wobei:

basierend darauf, dass ein Intervall der RBs, die den mindestens einen RB-Interlace darstellen, M ist, der m-te RB-Interlace aus {m, M+m, 2M+m, ... (k-1)M+m, kM+m} RBs besteht, und
das m eines von {0, 1, ..., M-1} ist und k eine natürliche Zahl größer oder gleich 1 ist.

13. Erste Benutzerausrüstung, UE, (100), die eine Sidelink-Kommunikation, SL-Kommunikation, in einem Drahtloskommunikationssystem durchführt, wobei die erste UE umfasst:

mindestens einen Transceiver (106) und
mindestens einen Prozessor (102), der mit dem einen oder den mehreren Transceiver(n) gekoppelt ist;
wobei der eine oder die mehreren Prozessor(en) konfiguriert ist/sind zum:

Empfangen (S1110), durch den mindestens einen Transceiver, von Konfigurationsinformationen, die sich auf einen SL-Ressourcenpool beziehen, einschließlich erster Informationen, die sich auf mindestens einen Unterkanal beziehen, von einer Basisstation und
Übertragen (S1120), durch den mindestens einen Transceiver, von Sidelink-Steuerinformationen, SCI, die einen Index eines spezifischen Unterkanals unter dem mindestens einen Unterkanal angeben, an eine zweite UE (200),
wobei der mindestens eine Unterkanal basierend auf mindestens einem Ressourcenblock-Interlace, RB-Interlace, konfiguriert ist,
wobei die Konfigurationsinformationen eine Anzahl des mindestens einen RB-Interlace und einen Index eines Start-Interlace einschließen, und
**dadurch gekennzeichnet, dass** der Prozessor ferner konfiguriert ist, um basierend auf einer erfolglosen Kanalzugriffsprozedur für einen dritten RB-Satz unter mindestens einem RB-Satz, der dem spezifischen Unterkanal entspricht, keine Sidelink-Daten an die zweite UE zu übertragen.

**Revendications**

1. Procédé de réalisation, par un premier équipement (100) d'utilisateur, UE, d'une communication de liaison latérale, SL, dans un système de communication sans fil, le procédé comprenant :

   la réception (S1110) d'informations de configuration liées à un groupe de ressources SL comprenant des premières informations liées à au moins un sous-canal en provenance d'une station de base ; et
   la transmission (S1120) à un deuxième UE (200) d'informations de commande de liaison latérale, SCI, indiquant un indice d'un sous-canal spécifique parmi le sous-canal ou les sous-canaux,
   le sous-canal ou les sous-canaux étant configurés sur la base d'au moins un entrelacement de blocs de ressource, RB,
   les informations de configuration incluant un nombre de l'entrelacement ou des entrelacements de RB et un indice d'un entrelacement de départ, et
   **caractérisé en ce que**
   des données de liaison latérale ne sont pas transmises au deuxième UE par l'intermédiaire du sous-canal spécifique sur la base d'une procédure d'accès de canal infructueuse pour un troisième ensemble de RB parmi au moins un ensemble de RB correspondant au sous-canal spécifique.

2. Procédé selon la revendication 1, dans lequel :
   chaque indice du sous-canal ou des sous-canaux correspond à chaque indice de l'entrelacement ou des entrelacements de RB.

3. Procédé selon la revendication 1, dans lequel :
   un indice du ou de chaque sous-canal correspond à chacun d'au moins un RB appartenant à un ensemble de RB spécifique parmi une pluralité d'ensembles de RB inclus dans l'entrelacement ou les entrelacements de RB.

4. Procédé selon la revendication 1, dans lequel :

   un indice de certains parmi le sous-canal ou les sous-canaux correspond à chacun d'au moins un RB appartenant à un premier ensemble de RB parmi une pluralité de RB inclus dans l'entrelacement ou chacun des entrelacements de RB, et
   un indice du reste du sous-canal ou des sous-canaux correspond à chacun d'au moins un RB appartenant à un deuxième ensemble de RB parmi une pluralité de RB inclus dans l'entrelacement ou chacun des entrelacements de RB.

5. Procédé selon la revendication 1, dans lequel :

   un indice d'un premier sous-canal parmi le sous-canal ou les sous-canaux correspond à au moins un RB appartenant à un premier ensemble de RB parmi une pluralité de RB inclus dans le premier entrelacement de RB, et
   un indice d'un deuxième sous-canal parmi le sous-canal ou les sous-canaux correspond à au moins un RB appartenant à un deuxième ensemble de RB parmi une pluralité de RB inclus dans le deuxième entrelacement de RB.

6. Procédé selon la revendication 1, dans lequel :

   le sous-canal spécifique est indiqué par l'intermédiaire d'un champ d'affectation de ressource de fréquence inclus dans les SCI, et
   des données de liaison latérale sont transmises du premier UE au deuxième UE par l'intermédiaire du sous-canal spécifique.

7. Procédé selon la revendication 1, dans lequel :
   une taille du sous-canal ou de chacun des sous-canaux est déterminée sur la base du nombre de l'entrelacement ou des entrelacements de RB.

8. Procédé selon la revendication 1, dans lequel :

   sur la base de la réussite de la procédure d'accès au canal pour le troisième ensemble de RB parmi l'ensemble ou les ensembles de RB correspondant au sous-canal spécifique, des données de liaison latérale sont transmises du premier UE au deuxième UE par l'intermédiaire du troisième ensemble de RB, et

des informations sur les données de liaison latérale sont mappées sur le troisième ensemble de RB.

9. Procédé selon la revendication 8, dans lequel :
des informations sur les mêmes données de liaison latérale sont mappées sur la totalité de l'ensemble d'au moins un RB correspondant au sous-canal spécifique.

10. Procédé selon la revendication 1, dans lequel :
les données de liaison latérale transmises au deuxième UE par le premier UE sur la base des SCI comprennent un canal physique partagé de liaison latérale, PSSCH.

11. Procédé selon la revendication 1, dans lequel :
le sous-canal ou les sous-canaux sont configurés sur une bande sans licence pour une communication de liaison latérale.

12. Procédé selon la revendication 1, dans lequel :

sur la base du fait qu'un intervalle des RB constituant l'entrelacement ou les entrelacements de RB soit M, le m-ième entrelacement de RB est constitué de {m, M+m, 2M+m, ... (k-1)M+m, kM+m} RB, et
le m est un élément de {0, 1, ..., M-1}, et k est un entier naturel supérieur ou égal à 1.

13. Premier équipement (100) d'utilisateur, UE, effectuant une communication latérale, SL, dans un système de communication sans fil, le premier UE comprenant :

au moins un émetteur-récepteur (106) ; et
au moins un processeur (102) couplé à l'émetteur-récepteur ou aux émetteurs-récepteurs,
le ou les processeurs étant configurés pour :

recevoir (S1110), par l'intermédiaire de l'émetteur-récepteur ou des émetteurs-récepteurs, des informations de configuration liées à un groupe de ressources SL incluant des premières informations liées à au moins un sous-canal provenant d'une station de base ; et
transmettre (S1120) à un deuxième UE (200), par l'intermédiaire de l'émetteur-récepteur ou des émetteurs-récepteurs, des informations de commande de liaison latérale, SCI, indiquant un indice d'un sous-canal spécifique parmi le sous-canal ou les sous-canaux, le sous-canal ou les sous-canaux étant configurés sur la base d'au moins un entrelacement de blocs de ressource, RB,
les informations de configuration incluant un nombre de l'entrelacement ou des entrelacements de RB et un indice d'un entrelacement de départ, et
**caractérisé en ce que** le processeur est en outre configuré pour ne pas transmettre de données de liaison latérale au deuxième UE par l'intermédiaire du sous-canal spécifique sur la base d'une procédure d'accès de canal infructueuse pour un troisième ensemble de RB parmi au moins un ensemble de RB correspondant au sous-canal spécifique.

FIG.1

# FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
– In a resource grid, $(k, \bar{l})$
– In a resource block, $(k, l)$

$k = 0$

$l = 0$

$l = 14 \cdot 2^{\mu} - 1$

# FIG.4

## FIG.5

Resource grid

A carrier
(up to 3300 subcarriers,i,e.,275 RBs)

A BWP

1 RB=12 subcarrier

1 RE

1 subcarrier

1 Symbol

k=0

l=0 ·····

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

EP 4 271 073 B1

# FIG.7

PC5-U

(a)

PC5-C

(b)

# FIG.8

(a)                                                    (b)

FIG.9

(a)          (b)          (c)

●:TRANSMITTING TERMINAL
⊘:RECEIVING TERMINAL

# FIG.10

FIG.11

```
┌─────────────────────────────────────────────────────────┐
│        RECEIVING CONFIGURATION INFORMATION  RELATED TO AN │
│ SL RESOURCE POOL INCLUDING FIRST INFORMATION RELATED TO AT│ ～S1110
│        LEAST ONE SUBCHANNEL FROM THE BASE STATION         │
└─────────────────────────────────────────────────────────┘
                            │
                            ▼
┌─────────────────────────────────────────────────────────┐
│        TRANSMITTING SIDELINK CONTROL INFORMATION (SCI)    │
│      INDICATING AN INDEX OF A SPECIFIC SUBCHANNEL AMONG    │ ～S1120
│          AT LEAST ONE SUBCHANNEL TO THE SECOND UE         │
└─────────────────────────────────────────────────────────┘
```

# FIG.12

```
┌─────────────────────────────────────┐
│  RECEIVING SCI INDICATING AN INDEX OF│
│  A SPECIFIC SUBCHANNEL AMONG AT LEAST │──── S1210
│  ONE SUBCHANNEL FROM THE FIRST TERMINAL│
└─────────────────────────────────────┘
                   │
                   ▼
┌─────────────────────────────────────┐
│    RECEIVING SIDELINK DATA FROM THE   │──── S1220
│      FIRST UE BASED ON THE SCI        │
└─────────────────────────────────────┘
```

FIG.13

```
NETWORK SIDE              FIRST UE                                    SECOND UE
     │  S105  CONFIGURATION    │                                         │
     │  ∫       INFORMATION    │                                         │
     │ ──────────────────────► │                                         │
     │                         │                         S110            │
     │                         │            SCI          ∫               │
     │                         │ ──────────────────────────────────────► │
     │                         │                         S115            │
     │                         │     SL SIGNAL/CHANNEL    ∫               │
     │                         │ ◄─────────────────────────────────────► │
     │                         │                                         │
```

# FIG.14

EP 4 271 073 B1

## EP 4 271 073 B1

**Patent documents cited in the description**

- WO 2021237654 A1
- US 20220077991 A1
- WO 2022073183 A1

**Non-patent literature cited in the description**

- **E. DAHLMAN et al.** 5G NR The Next Generation Wireless Access Technology
- physical channels and modulation. *3GPP LTE, TS 36.211*
- multiplexing and channel coding. *TS 36.212*
- physical layer procedures. *TS 36.213*
- overall description. *TS 36.300*
- radio resource control. *TS 36.331*
- physical channels and modulation. *3GPP NR, TS 38.211*
- multiplexing and channel coding. *TS 38.212*
- physical layer procedures for control. *TS 38.213*
- physical layer procedures for data. *TS 38.214*
- NR and NG-RAN(New Generation-Radio Access Network) overall description. *TS 38.300*
- radio resource control protocol specification. *TS 38.331*